# EUROPÄISCHE PATENTANMELDUNG

(11) **EP 1 739 275 A2**
(43) Veröffentlichungstag der Anmeldung: **03.01.2007**
(21) Anmeldenummer: 06001574.0
(22) Anmeldetag: 26.01.2006
(51) Int. Cl.: E06B 9/90, E05F 15/00

(54) **Rollo mit elektrischem Einklemmschutz**

(30) Priorität: 30.06.2005 DE 102005030962
(71) Anmelder: BOS GmbH & Co. KG, 73760 Ostfildern (DE)
(72) Erfinder: Schlecht, Werner P., 71665 Vaihingen/Enz-Aurich (DE); Hansen, Melf, 75053 Gondelsheim (DE)
(74) Vertreter: Rüger, Barthelt & Abel Patentanwälte

(57) **Zusammenfassung**

Als Einklemmschutz bei Fensterrollos von Kraftfahrzeugen ist eine Überwachung eines Betriebsparameters des Elektromotors vorgesehen, der das Fensterrollo bewegt. Der Motorstrom wird abgeschaltet, wenn ein Grenzwert überschritten wird. Dies wird als Signal dafür interpretiert, dass eine Einklemm- oder Quetschsituation vorliegt.

## Beschreibung

In zunehmendem Maße werden in Pkw's elektrisch betätigte Sonnenrollos verwendet. Diese Sonnenrollos kommen an den Seitenfenstern der hinteren Türen, der Heckscheibe oder dem Glasdach zur Anwendung. Ein Fensterrollo für Heckscheiben ist beispielsweise aus der DE 103 51 040 A1 bekannt. Das dort beschriebene Heckscheibenrollo weist eine unterhalb der Hutablage drehbar gelagerte Wickelwelle auf, an der mit einer Kante eine Rollobahn befestigt ist. Das freie Ende der Rollobahn ist mit einem Spriegel oder Zugstab verbunden. Der Zugstab ist rohrförmig und nimmt den Hals von zwei Führungsstücken auf, die an jedem Ende des Spriegels vorgesehen sind. Die Führungstücke laufen in Führungsschienen, die seitlich neben der Heckscheibe in der inneren Seitenverkleidung angeordnet sind.

Der Antrieb des Spriegels geschieht über linienförmige Schubglieder die in den Führungsschienen laufen. Die Antriebsglieder ihrerseits sind formschlüssig über ein Ausgangszahnrad eines Getriebemotors angetrieben.

Grundsätzlich den gleichen Aufbau zeigen die Rollos von Kraftfahrzeugseitenfenstern oder auch die Rollos von Dachfenstern. Wegen des elektromotorischen Antriebs besteht eine gewisse Einklemmgefahr. Der Motor ist hinsichtlich der zur Verfügung stehenden Antriebskraft einigermaßen überdimensioniert. Das Abschalten des Motors ist in aller Regel zeitgesteuert, was bedeutet, dass beim Ausfahren des Rollos der Spriegel gegen einen formschlüssigen Anschlag läuft und dort mit hoher Kraft angepresst bleibt solange, bis durch das Zeitgitter der Motor abgeschaltet wird.

Die Betätigungskraft ist verhältnismäßig hoch und es besteht durchaus eine gewisse Verletzungsgefahr, wenn jemand mit Körperteilen zwischen dem sich bewegenden Spriegel und einem festen Anschlag im Fahrzeug gelangt. Die Gefahr besteht sowohl beim Einfahren als auch beim Ausfahren. Die Gefahr ist insbesondere bei Seitenfenstern verhältnismäßig groß, wenn die Seitenscheibe heruntergelassen ist. Ähnliche Verhältnisse liegen vor bei einem geöffneten Glasdach.

Bei Heckfenstern, bei denen der Spriegel bzw. das Auszugsprofil über eine Hebelanordnung betätigt wird, entsteht auch eine gewisse Gefahr des Einklemmens, wenn das Rollo einfährt, weil hier das Auszugsprofil nicht passiv über den Federmotor der Wickelwelle sondern über den Elektromotor erfolgt.

Ausgehend hiervon ist es Aufgabe der Erfindung ein Rollo zu schaffen, bei dem die Verletzungsgefahr durch Einklemmen vermindert ist.

Diese Aufgabe wird erfindungsgemäß durch ein Fensterrollo mit den Merkmalen des Anspruches 1 gelöst.

Bei dem neuen Fensterrollo ist eine Wickelwelle vorgesehen, die drehbar gelagert ist. An der Wickelwelle ist eine Rollobahn mit einer Kante befestigt. Die von der Wickelwelle abliegende Kante ist mit einer Zugstabanordnung verbunden.

Es ist wenigstens ein Elektromotor vorgesehen, um die Rollobahn in wenigstens einer Richtung zu bewegen. Dem Elektromotor ist ein Sensor zugeordnet, um einen Betriebsparameter des Elektromotors zu erfassen. Dieser Betriebsparameter kann je nach Einbauort und Zweckmäßigkeit der Gesamtanordnung der vom Motor aufgenommene Strom, die Stromänderung dI/dt des Motorstroms oder die Drehzahl des Motors oder die Drehzahländerung dn/dt sein. Diese Betriebsparameter ändern sich abhängig davon, ob der Motor lediglich die Rollobahn bewegt, oder ob zusätzlich irgendwelche Gegenstände sich im Bewegungsweg des Auszugsprofils befinden und eine Blockierung hervorrufen würden. Hierdurch kann sicher ein Einklemmen mit Verletzungsgefahr vermieden werden. Gleichzeitig ermöglicht diese Anordnung eine Endabschaltung mit geringer Verspannung im System.

Eine mit dem Sensor verbundene Steuerschaltung wertet das vom Sensor abgegebene Signal aus und sorgt dafür, dass unabhängig von der sonstigen Betätigung der Motorstrom zwangsläufig abgeschaltet wird, wenn der Grenzwert überschritten wird.

Durch diese Maßnahme kann die Kraft, die an der Zugstabanordnung entsteht in solchen Grenzen gehalten werden, dass eine Verletzung praktisch ausgeschlossen ist.

Je nachdem wie das Rollo mechanisch ausgeführt ist, d.h. ob die Zugstabanordnung im Sinne des Wegbewegens von dem Auszugsschlitz mit dem Elektromotor betätigt wird oder in der entgegengesetzten Richtung, kann der Grenzwert dem Betriebsparameter beim Ausfahren oder dem Betriebsparameter beim Einfahren zugeordnet werden.

Wenn die Bewegung der Zugstabanordnung in beiden Richtungen durch den Elektromotor erfolgt und in beiden Richtungen eine Einklemmgefahr besteht, kann es von Bedeutung sein bei beiden Bewegungsrichtungen die Überwachung des Betriebsparameters vorzunehmen.

Bei heute weit verbreiteten Heckscheibenrollos verfolgt das Aufwickeln der Rollobahn auf die Wickelwelle unter Zuhilfenahme eines Federmotors. In diesem Falle genügt es, wenn lediglich der Strom beim Ausfahren überwacht wird.

Im Übrigen sind Weiterbildungen Gegenstand von Unteransprüchen.

In der nachfolgenden Figurenbeschreibung sind einige prinzipielle Ausführungsbeispiele erläutert, ohne dass auf das letzte Detail eingegangen wird. Es versteht sich, dass diese grundsätzlichen Ausführungsformen abwandelbar sind, um sie an die jeweilige Anwendungssituation anzupassen.

In der Zeichnung sind Ausführungsbeispiele des Gegenstandes der Erfindung dargestellt. Es zeigen:
- Fig. 1: den aufgebrochenen Fondbereich eines Pkw mit Blick auf die rechte hintere Innenseite, in einer schematisierten perspektivischen Darstellung;
- Fig. 2: den prinzipiellen mechanischen Aufbau des Seitenfensterrollos, wie es in dem Fahrzeug nach Fig. 1 eingebaut ist;
- Fig. 3: das Prinzipschaltbild zur Motorstromüberwachung;
- Fig. 4: das Flussdiagramm zu der Motorstromüberwachung nach Fig. 3;
- Fig. 5: eine Darstellung des Dachbereiches eines PKWs mit einem Dachfensterrollo und
- Fig. 6: ein Heckfensterrollo in einer perspektivischen Darstellung mit einer Hebelanordnung zum Bewegen der Zugstabanordnung.

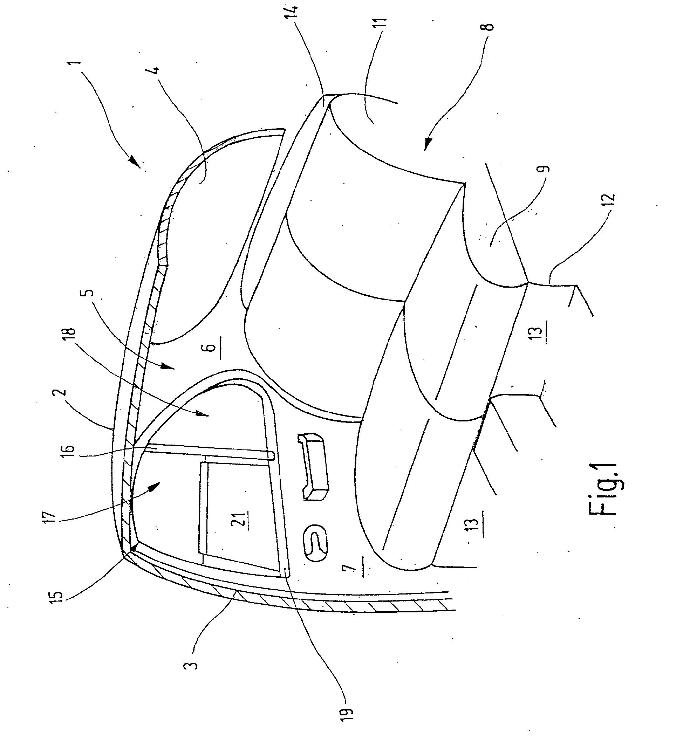

Fig. 1 stellt den aufgebrochenen abgeschnittenen Fondbereich eines Pkw dar. Die Figur veranschaulicht einen Blick auf die rechte Innenseite, die zu der nicht veranschaulichten linken Innenseite spiegelbildlich ist. Die Darstellung ist vereinfacht. So sind beispielsweise Karosserinnenstrukturen, wie Versteifung und Befestigungsmittel nicht gezeigt, da ihre Darstellung für das Verständnis der Erfindung nicht erforderlich ist. Ebenso ist die Darstellung der Karosserie schematisiert und lässt die dort vorhandenen Hohlräume nicht erkennen.

Der veranschaulichte Karosserieabschnitt 1 weist ein Dach 2 auf, von dem seitlich eine B-Säule 3 nach unten zu einer nicht gezeigten Bodengruppe führt. Die entsprechende B-Säule wäre auf der weggebrochenen Seite des Fahrzeugs zu denken. Die B-Säulen sind geneigt, so dass ihr oberes Ende zum Fahrzeugheck verlagert ist.

Das Dach 2 geht an seiner Hinterkante in ein Heckfenster über. Seitlich endet das Heckfenster an einer C-Säule 5, die sich im Abstand zu der B-Säule 3 befindet. Die C-Säule 5 trägt eine Innenverkleidung 6.

Zwischen der B-Säule 3 und der C-Säule 6 ist an der B-Säule eine hintere rechte Seitentür 7 in bekannter Weise anscharniert.

Auf der Höhe der hinteren rechten Seitentür 7 befindet sich eine Rücksitzbank 8, zu der eine Sitzfläche 9 sowie eine Rücksitzlehne 11 gehören. Die Rücksitzfläche 9 liegt auf einer Sockelfläche 12, die zu einer Bodengruppe gehört und vor der Fußräume 13 ausgebildet sind.

Auf der Höhe der Oberkante der Rücksitzlehne 11 erstreckt sich eine Hutablage 15 zu der Unterkante der Heckscheibe 4.

Die hintere rechte Seitentür 7 ist in der für Limousinen üblichen Weise mit einem Seitenfenster 15 versehen. Das Seitenfenster 15 wird durch eine etwa vertikal verlaufende Strebe 16 in ein im Wesentlichen viereckiges Fensterfeld 17 sowie ein etwa dreieckiges Fensterfeld 18 aufgeteilt. Am unteren Ende werden die beiden Felder 17 und 18 von einer Fensterbrüstung 19 begrenzt. Die Fensterbrüstung 19 verläuft unter einem Winkel kleiner als 90° zu einer vorderen Fensterkante 20.

Die in dem Fensterfeld 17 vorhandene Scheibe ist in bekannter Weise auf und ab zu bewegen, wozu sie unter anderem in der vertikalen Strebe 16 in bekannter Weise geführt ist.

Das Fensterfeld 17 ist durch eine zugeordnete Rollobahn 21 wahlweise abzuschatten, die durch einen Schlitz in der Fensterbrüstung 19 aus dem Innenraum der Tür 7 ausziehbar ist. Der Antriebsmechanismus für die Rollobahn 21 befindet sich in dem Innenraum der Tür 7 unterhalb der Fensterbrüstung 19.

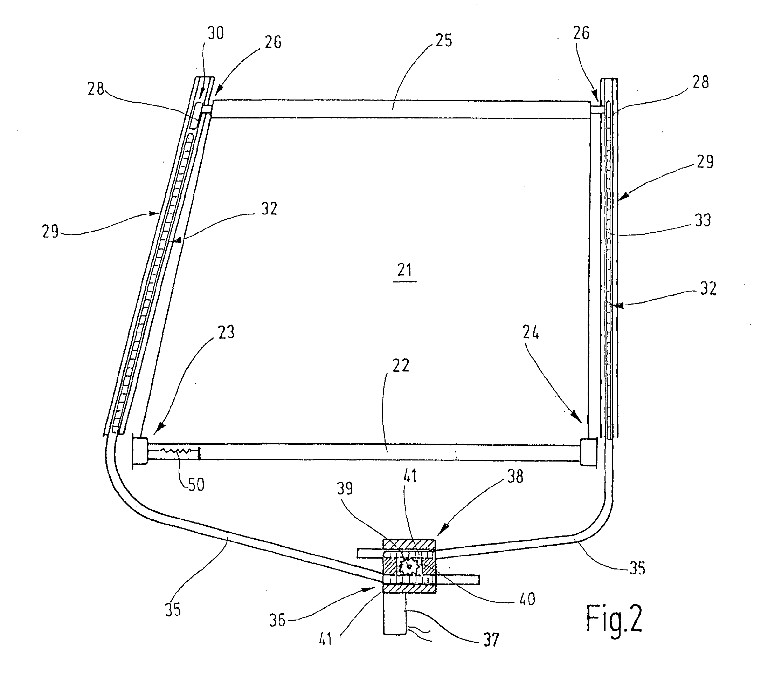

Fig. 2 zeigt die wesentlichen Bestandteile, die dazu vorgesehen sind, die Rollobahn 21 anzutreiben, zu führen bzw. im nicht gebrauchten Zustand aufzubewahren.

Die Rollobahn 21 weist einen Zuschnitt auf, der etwa der Fläche des Fensterfeldes 17 entspricht und durch im Wesentlichen gerade Kanten angenähert ist. Die Rollobahn 21 ist mit ihrer Unterkante an einer Wickelwelle 22 befestigt, die zwischen Wickelwellenlageranordnungen 23 und 24 drehbar und axial beweglich gelagert ist.

Die von der Wickelwelle 22 abliegende Kante der Rollobahn 21 bildet eine schlauchförmige Schlaufe, durch die hindurch eine biegefeste Zugstabanordnung 25 hindurch führt. Von der Zugstabanordnung 25 sind lediglich deren außen liegende Führungsarme 26 zu erkennen. Der Führungsarm 26 trägt endseitig einen Führungskörper 28. Beide Führungsarme sind in einem starren Mittelstück teleskopartig verschiebbar.

Um die Rollobahn 21 während einer Ausfahrbewegung zu führen, verlaufen seitlich neben der ausgezogenen Rollobahn 21 zwei Führungsschienen 29. Jede Führungsschiene 29 enthält eine in Längsrichtung durchlaufende Nutenkammer 30, die sich über einen Nutenschlitz 31 in Richtung auf die Rollobahn 21 öffnet und im Querschnitt kreisförmig ist.

In den beiden Nutenkammern 30 der beiden Führungsschienen 29 laufen axial beweglich zugehörige und schraubenförmig verzahnte Schubglieder 32. Jedes Schubglied 32 besteht aus einer zylindrischen Seele 33, um die herum schraubenförmig eine erhabene Wendel 34 umläuft. Die Wendel 34 bildet einen schraubenförmig um die Seele 33 herumlaufenden Zahn. Das Schubglied 32 hat somit die Gestalt einer schräg verzahnten flexiblen Zahnstange mit kreisförmigem Querschnitt.

Die Schubglieder (32) sind mit ihrem oberen Ende zug-und druckfest mit dem zugehörigen Führungskörper 28 verbunden.

Die Schubglieder 32 sind an sich nur sehr wenig knicksteif, weshalb sie in der Nutenkammer 30 ausknicksicher geführt sind.

Am unteren Ende jeder Führungsschiene 29 schließt sich ein Führungsrohr 35 an, das die Nutenkammer 30 der betreffenden Führungsschiene 29 mit einem Getriebemotor 36 verbindet.

Zu dem Getriebemotor 36 gehört ein permanent erregter Gleichstrommotor 37, der ein Getriebe antreibt, das sich in einem Getriebegehäuse 38 befindet. Auf einer Ausgangswelle 39 sitzt ein Ausgangszahnrad 40, das so gestaltet ist, dass es formschlüssig in die Verzahnung der beiden Schubglieder 32 eingreifen kann. Damit die Schubglieder 32 seitlich nicht ausweichen können, sind sie in Bohrungen 41 geführt, die tangential an dem Ausgangszahnrad 40 vorbei laufen. An diese Bohrungen 41 schließen die Führungsrohre 35 an.

In Verlängerung der Bohrungen 41 können noch Speicherrohre vorhanden sein, um den nicht aktiven Teil des Schubglieds geordnet zu führen.

Die Wirkungsweise der erläuterten Anordnung ist wie folgt:

Im eingefahren Zustand liegt die Schlaufe unmittelbar benachbart zu der Wickelwelle 22, d.h. sie ist unterhalb der Brüstung 19 des Seitenfensters 17 zurückgezogen. Wenn der Benutzer, ausgehend von dieser Stellung die Rollobahn 21 vor dem Fenster 17 aufspannen will, setzt er den Getriebemotor 36 in Gang. Hierdurch werden synchron die beiden Schubglieder 32 in die zugehörigen Führungsschienen 29 vorgeschoben. Dabei drücken sie an beiden Seiten der Rollobahn 21 die Führungskörper 28 nach oben, d.h. sie schieben diese vor sich her. Gegen diese Vorschubbewegung wird ein Federmotor 42, wie er in Fig. 2 schematisch angedeutet ist. Die Kraft des Federmotors 42 ist ständig bestrebt, die Rollobahn 21 auf die Wickelwelle 22 auf zu wickeln d.h. zurückzuziehen bzw. festzuhalten.

Zum Einfahren der Rollobahn 21 wird der Getriebemotor 37 mit der umgekehrten Drehrichtung in Gang gesetzt. Hierdurch werden die Schubglieder 32 aus den Führungsschienen 29 nach unten in Richtung auf die Wickelwelle 22 zurückgezogen und nehmen dabei die angekuppelte Zugstabanordnung 25 nach unten mit. Der in der Wickelwelle 22 enthaltene Federmotor 42 wickelt entsprechend die Rollobahn 21 auf der Wickelwelle 22 auf.

Das Einfahren ist beendet, wenn die Schlaufe mit der Zugstabanordnung 25 am Schlitz angekommen ist.

Wie in den Figuren unschwer zu entnehmen ist, besteht eine gewisse Einklemmgefahr beim Ausfahren des Seitenfensterrollos. Wenn nämlich beispielsweise die Seitenscheibe geöffnet ist und der Getriebemotor im Sinne eines Ausfahrens der Rollobahn 21 in Gang gesetzt wird, kann zwischen der biegesteifen Zugstabanordnung 25 und der Fensteroberkante etwas eingeklemmt werden. Die von dem Getriebemotor 36 gelieferte Kraft kann durchaus so hoch sein, dass Verletzungen beim Einklemmen zwischen der Fensteroberkante und der Zugstabanordnung 25 nicht immer ausgeschlossen sind.

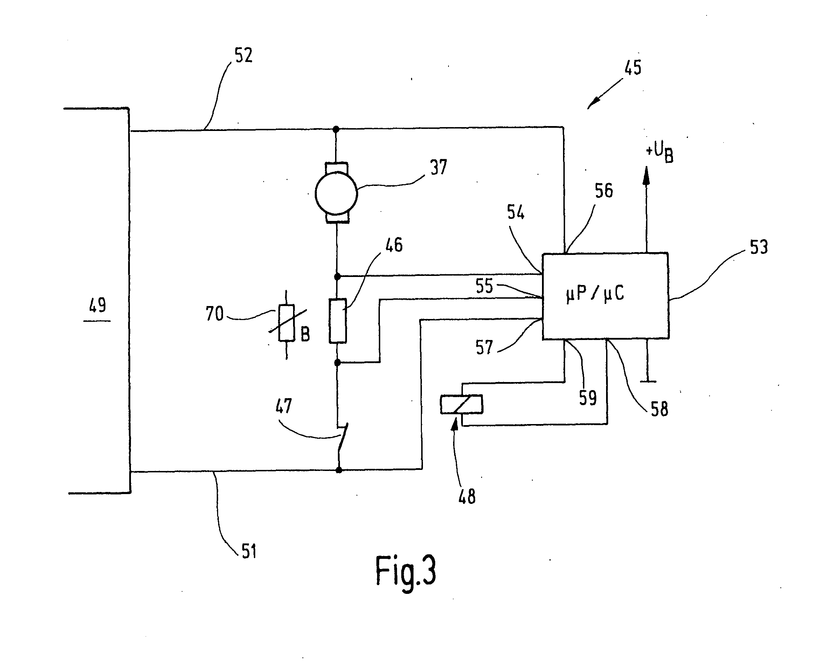

Um dem vorzubeugen ist eine in Fig. 3 schematisch dargestellter elektrischer Einklemmschutz 45 vorgesehen. Der Einklemmschutz weist einen elektrisch mit dem Gleichstrommotor 37 in Serie liegenden Stromsensorwiderstand 46 auf, der mit einem Ruhekontakt 47 eines Relais 48 verbunden ist. In dem Ruhekontakt 47 besteht eine elektrische Verbindung zu einem Bordnetz 49 über eine Verbindungsleitung 50. Eine weitere Anschlussleitung 52 verbindet das andere Ende des Gleichstrommotors 37 ebenfalls mit dem Bordnetz 49, das hier lediglich schematisch gezeigt ist. In der Praxis wird es sich hierbei um die zentrale Steuerung des Kraftfahrzeugs handeln, mit deren Hilfe über einen Schalter gesteuert ist, normalerweise der Getriebemotor 37 für das Seitenfensterrollo wahlweise in jeweiligen Betriebsrichtung in Gang gesetzt werden kann. Ein Eingehen auf die Anordnung innerhalb des Bordnetzes 49 wird sich an dieser Stelle, da sie nicht Gegenstand der Erfindung ist.

Zum Erfassen des von dem Gleichstrommotor 37 aufgenommenen Stroms ist ein Mikroprozessor oder Mikrokontroller 53 vorgesehen, der mit seinen Eingängen 54 und 55 zu dem Stromsensorwiderstand 46 parallel liegt. Ein weiterer Eingang 56 ist an die Anschlussleitung 52 angeschlossen, während ein Eingang 57 des Mikroprozessors zu der Verbindungsleitung 51 führt. Über zwei Ausgänge 58 und 59 ist der Magnetwickler des Relais 48 mit dem Mikroprozessor 53 verbunden.

Solange der Ruhekontakt 47 geschlossen ist, arbeitet die Anordnung in der üblichen Weise. Je nach Drehrichtung des Gleichstrommotors 37 liegt entweder die Leitung 51 auf Masse, während die andere Leitung 52 die volle Batteriespannung führt, oder bei umgekehrter Drehrichtung liegt die Leitung 52 auf Masse, während auf der Leitung 51 die volle Batteriespannung ansteht. Der Gleichstrommotor 37 ist abgeschaltet, wenn entweder beide Leitungen 51 und 52 auf Massepotential liegen oder auf dem Potential der Batteriespannung.

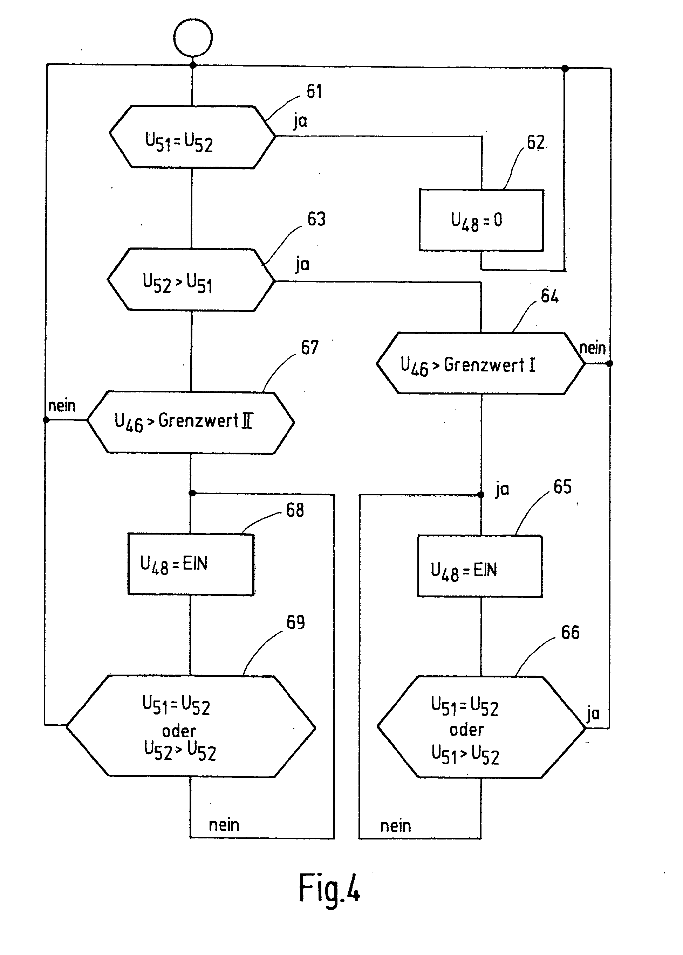

Der Mikroprozessor 53 wertet über seine Signaleingänge 56 und 57 diese Situation aus. Er kann gemäß dem Flussdiagramm nach Fig. 4 den Einklemmschutz 49 steuern.

Wenn gemäß der Überprüfung im Abfragblock 61 die Spannung der Leitung 51 gleich der Spannung auf der Leitung 52 ist, ist der Strom für das Relais 48 abgeschaltet und somit der Ruhekontakt 47 geschlossen (Anweisungsblock 62). Wenn die beiden Spannungen nicht gleich sind, liegt beispielsweise ein Betrieb im Sinne des Ausfahrens des Rollos vor, wenn die Spannung auf der Leitung 52 größer ist als die Spannung auf der Leitung 51, was im Abfrageblock 63 geprüft wird. In diesem Falle setzt die Überwachung im Abfrageblock 64 ein und der Mikroprozessor 53 prüft den Spannungsabfall an den Widerstand 46. So lange diese Spannung unter einem vorbestimmten Wert bleibt, wird geschlossen, dass die Zugstabanordnung 26 nicht gegen einen Widerstand anläuft und damit keine Einklemmgefahr besteht. Das Programm geht wieder an den Anfang zurück und durchläuft die Überprüfungen zyklisch. Sollte im Laufe des Betriebs die Zugstabanordnung 25 gegen einen Widerstand anlaufen, steigt der Spannungsabfall an dem Sensorwiderstand 46 über den Grenzwert 1 an. Damit wird der Abfrageblock 64 zu einem folgenden Anweisungsblock 65 verlassen. Hier wird der Strom für das Relais 48 eingeschaltet, wodurch der Ruhekontakt 47 geöffnet wird und der Strom durch den Motor 37 unterbrochen wird.

In einem nachfolgenden Abfrageblock 66 prüft der Mikroprozessor 53, ob die Spannung auf der Leitung 51 gleich der Spannung auf der Leitung 52 geworden ist, was darauf hindeutet, dass der Benutzer das Fensterrollo abgeschaltet hat, oder ob sich die Spannungen an den Leitungen 51 und 52 gegenüber vorher umgekehrt haben, was bedeutet, dass der Benutzer das Rollo im Sinne eines Einfahrens betätigen will. Wenn eine von beiden Bedingungen erfüllt ist, kehrt das Programm an den Anfang zurück, andernfalls an den Anfang des Anweisungsblocks 65. Dadurch bleibt der Strom für den Motor 37 so lange zwangsweise über den elektrischen Einklemmschutz 45 abgeschaltet, bis der Benutzer willkürlich das Fensterrollo abschaltet, oder im Sinne eines Öffnens in Gang setzt.

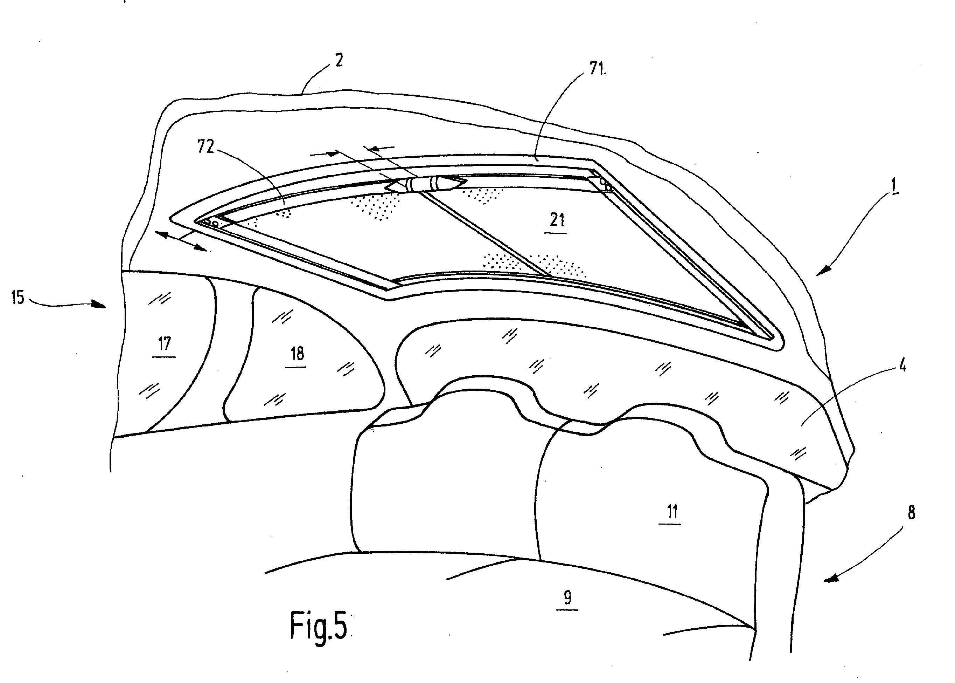

Die gezeigte Einklemmschutzschaltung eignet sich nicht nur für Seitenfensterrollos, wie sie anhand der Fig. 1 und 2 erläutert sind, sondern auch für Dachfensterrollos, wie sie in Fig. 5 gezeigt sind, oder für Heckscheibenrollos, soweit die Betätigung der Zugstabanordnung 25 entsprechend der Darstellung in Fig. 2 erfolgt.

Wenn der in Fig. 2 gezeigte Mechanismus und Grundaufbau eines Rollos für ein Heckfensterrollo verwendet wird, wie es aus dem Stand der Technik ebenfalls bekannt ist, beispielsweise aus der DE 100 57 760 A1**,** auf die ausdrücklich Bezug genommen ist, besteht in beiden Bewegungsrichtungen eine Einklemmgefahr. Beim Ausfahren besteht die Einklemmgefahr zwischen dem Dachhimmel und der Zugstabanordnung 25. Die Normvorschriften gehen davon aus, dass eine Einklemmgefahr gegeben ist, wenn der Spalt kleiner als 200 mm wird. Dies ist in aller Regel gegeben.

Umgekehrt kann eine Einklemmgefahr auch beim Einfahren vorliegen. Die Zugstabanordnung 25 mit den über die Rollobahn 19 seitlich überstehenden Führungsarmen 26 taucht durch den Schlitz in der Hutablage durch. Dabei können die Schlitzränder zusammen mit den seitlich über die Rollobahn 19 überstehenden Führungsarme 26 wie eine Schere wirken. Ein zwangsläufiges Abschalten des Motorstroms bei beiden Bewegungsrichtungen ist deswegen angeraten. Allerdings unterscheiden sich je nach Bewegungsrichtung von Haus aus die vom Motor aufzubringenden Kräfte. Beim Ausfahren muss der Getriebemotor gegen die Wirkung des Federmotors 42 arbeiten und außerdem den Reibungswiderstand der Schubglieder 32 in den Führungsrohren bzw. Führungsschienen 29 überwinden. Beim Einfahren kehren sich die Verhältnisse insofern um, als der Federmotor 42 unterstützend wirkt. Außerdem werden die Schubglieder 32 auf Zug belastet und nicht auf Druck und können dabei durchaus andere Reibwerte in den Führungsrohren 42 erzeugen. Schließlich kommt noch hinzu, dass beim Einfahren die Einklemmgefahr im unteren Bewegungsbereich vorliegt, dann nämlich, wenn die Schubglieder 32 weitgehend aus den Führungsschienen 29 zurückgezogen sind und sich die Schubglieder 32 weitgehend kräftefrei in den Speicherrohren befinden. Es macht also Sinn mit zwei unterschiedlichen Grenzwerten je nach Bewegungsrichtung zu arbeiten.

In diesem Falle erweitert sich das prinzipielle Flussdiagramm nach Fig. 4 durch einen Abfrageblock 67, in dem geprüft wird, ob der Motor 37 bei der umgekehrten Drehrichtung einen größeren Strom aufnimmt, als es gemäß einem Grenzwert II zulässig ist. Wenn ja, wird ein Anweisungsblock 68 angefahren, der zum Öffnen des Ruhekontaktes 47 führt. Dieser Anweisungsblock 68 wird wiederum so lange ausgeführt, bis entweder sich die Drehrichtung umkehrt oder der Motor abgeschaltet wird, was in einem Anweisungsblock 69 überprüft wird.

In Fig. 3 ist die Überwachung des Momentanwertes des Motorstroms vorgesehen. Der Momentanwert des Motorstroms entspricht dem vom Motor abgegebenen Drehmoment. Anstelle des Momentanwertes des Motorstroms kann auch die Stromänderung dI/dt, also die Ableitung des Motorstroms nach der Zeit verwendet werden. Das Programm gemäß Fig. 4 bleibt damit unverändert, mit der Maßgabe, dass anstelle des Momentanwertes U₄₆ das Differenzial der Spannung dU₄₆/dt verwendet wird. Hierzu genügt es zwischen dem Stromsensor 46 und dem Programm eine Differenzierschaltung vorzusehen. Die Differenzierschaltung kann auch softwaremäßig in dem Mikroprozessor 53 realisiert werden.

Schließlich ist es denkbar, anstatt den Motorstrom zu überwachen als kennzeichnenden Parameter für eine Einklemmsituation die Motordrehzahl herzunehmen. Dazu enthält der Elektromotor 37 eine oder mehrere Hallsonden 70, wie sie in Fig. 3 gestrichelt exemplarisch angedeutet ist. Das Flussdiagramm nach Fig. 3 ändert sich dahingehend, dass an die Stelle von U₄₆ die Drehzahl n tritt.

Auch im Falle der Verwendung der Drehzahl besteht die Möglichkeit, anstelle des Momentanwertes die Drehzahländerung dn/dt als Kriterium heranzuziehen.

Schließlich kann es zweckmäßig sein eine Kombination der oben genannten Überwachungen von Betriebsparametern zu verwenden, also beispielsweise den Strom und die Drehzahländerung oder die Stromänderung und die Drehzahl usw.

Die Einklemmgefahr besteht auch bei Dachfenstern und Dachfensterrollos. Ein solches ist in Fig. 5 vereinfacht dargestellt.

Fig. 5 zeigt in einer schematisierten Ansicht und einem ähnlichen Blickwinkel einen Ausschnitt aus einem Fahrzeug mit einer etwas anderen Karosserieform, für die einander entsprechenden Teile sind dieselben Bezugszeichen wie in Fig. 1 verwendet.

Damit erübrigt sich auch eine erneute Beschreibung.

Wie zu erkennen ist, enthält das Dach 2 einen rechteckigen Dachausschnitt 71 indem ein entsprechendes Dachfenster untergebracht ist. Unterhalb des Dachausschnitts 71 befindet sich eine Rollobahn 21, deren freie Kante an einem Auszugsprofil 72 angebracht ist, das der Zugstabanordnung 25 aus Fig. 2 entspricht. Die Betätigung des Auszugsprofils 72 geschieht über einen ähnlichen Mechanismus wie er in Fig. 2 dargestellt ist. Die Wickelwelle befindet sich im Bereich der Fahrzeugheck hin gelegenen Kante des Dachausschnitts 71 während die Führungsschienen 29 parallel zu den Seitenkanten verlaufen.

Hier besteht die Gefahr des Einklemmens. Diese Gefahr wird mit der Anordnung nach den Fig. 3 und 4 weitgehend eliminiert.

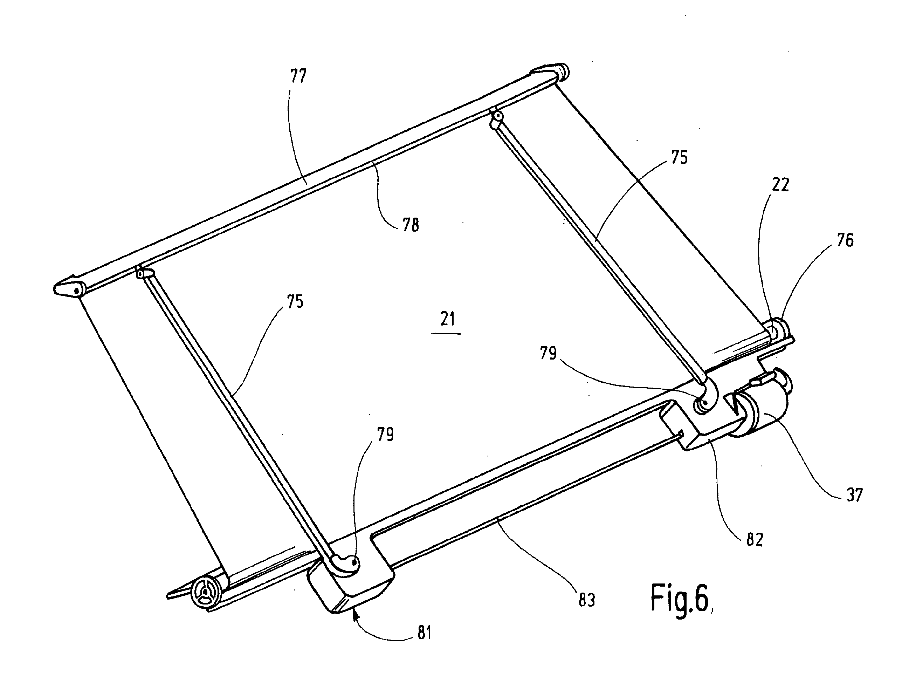

Fig. 6 zeigt ein Heckfensterrollo, bei dem die Betätigung der Rollobahn über zwei einarmige Hebel 75 erfolgt. In einem länglichen rohrförmigen Gehäuse 76 ist die bereits erwähnte Wickelwelle 22 drehbar gelagert. Sie ist, wie bei den vorherigen Ausführungsbeispielen, mittels eines Federmotors im Sinne eines Aufwickelns der Rollobahn 21 vorgespannt. An der freien Kante der Rollobahn 21, d.h. der von der Wickelwelle abliegenden Kante befindet sich ein Auszugsprofil 77, das funktionsmäßig der Zugstabanordnung 25 weitgehend entspricht. Es enthält auf der dem Betrachter zugekehrten Seite Nuten 78, die sich über die gesamte Länge des Auszugsprofils erstrecken. In diesen Nuten gleiten die freien Enden der beiden Hebel 75.

Die Hebel 75 sind an ihrem unteren Ende drehfest auf einer Ausgangswelle 79 befestigt. Die Ausgangswelle 79 gehört zu einem Winkelgetriebe, das in einem Gehäuse 81 bzw. 82 untergebracht ist. Die Gehäuse 81 und 82 sind wie gezeigt in Längsrichtung des Gehäuses 76 voneinander beabstandet und an diesem befestigt. Die Ausgangswellen 79 sind zueinander parallel.

Angetrieben wird die Anordnung durch den Gleichstrommotor 37 der beispielsweise eine in dem Getriebegehäuse 82 enthaltene Schnecke wahlweise in Umdrehungen versetzt. Über eine Kuppelwelle 83 ist der Motor 37 außerdem mit dem in dem Getriebegehäuse 81 enthaltenen Getriebe verbunden.

Fig. 6 zeigt das Heckfensterrollo in der ausgefahrenen Stellung. Die Hebel 75 liegen in dieser Stellung etwa rechtwinklig zur Längserstreckung der Rollowelle 22. Zum Einfahren wird der Getriebemotor 37 mit der entsprechenden Drehrichtung in Umdrehungen versetzt. Dieser veranlasst, dass die beiden Hebel 75 aufeinander zu schwenken, wodurch der Abstand, den ihre freien Enden von der Rollowelle 22 haben, entsprechend abnimmt. Der mit der Rollowelle 22 gekuppelte Federmotor sorgt dafür, dass die Rollobahn 21 in jeder Stellung der Hebel 75 gespannt bleibt.

Die Einfahrstellung ist erreicht, wenn die beiden Hebel 75 etwa parallel zu der Wickelwelle 22 verlaufen.

In einer praktischen Ausführung befindet sich das Rollogehäuse 76 unterhalb der Hutablage 14, wie sie in Fig. 1 gezeigt ist. Das Rollo fährt durch Betätigung durch einen in der Hutablage 14 enthaltenen Schlitz aus. In der ausgefahrenen Stellung liegen die Hebel 75 etwa parallel zur Innenseite der Heckfensterscheibe 4.

Es leuchtet auch hier ohne weiteres ein, dass eine Einklemmgefahr besteht, sowohl in der vollständig ausgefahrenen Stellung zwischen der Fensteroberkante bzw. dem Dach einerseits und dem Auszugsprofil 77 andererseits, als auch dann, wenn das Auszugsprofil 77 zum Abdecken des Schlitzes in der Hutablage auf den Schlitzrändern aufstößt.

Bei ausgefahrenem Rollo können, weil die Hebel 75 steil stehen, bei einem verhältnismäßig kleinen Motordrehmoment relativ große Einklemmkräfte erzeugt werden. Im eingefahrenen Zustand hingegen sind die Einklemmkräfte kleiner, weil die Hebel liegen. Um dem Rechnung zu tragen, werden die beiden Grenzwerte I und II entsprechend unterschiedlich festgelegt.

Als Einklemmschutz bei Fensterrollos von Kraftfahrzeugen ist eine Überwachung eines Betriebsparameters des Elektromotors vorgesehen, der das Fensterrollo bewegt. Der Motorstrom wird abgeschaltet, wenn ein Grenzwert überschritten wird. Dies wird als Signal dafür interpretiert, dass eine Einklemm- oder Quetschsituation vorliegt.

## Patentansprüche

1. Rollo für Kraftfahrzeuge (1),
mit einer Wickelwelle (22), die drehbar gelagert ist,
mit einer Rollobahn (21), die mit einer Kante an der Wickelwelle (22) befestigt ist und die eine von der Wickelwelle (22) abliegende Kante aufweist,
mit einem Zugstabanordnung (25,77), die an der von der Wickelwelle (22) abliegenden Kante befestig ist,
mit wenigstens einem Elektromotor (37) um die Rollobahn (21) in wenigstens einer Richtung zu bewegen,
mit einem Sensor (46,70), der einen Betriebsparameter des Elektromotors (37) erfasst,
mit einer Steuerschaltung (45), die einen an dem Sensor (46) liegenden Eingang (54,55) aufweist und die ein Steuerprogramm enthält, das den Betriebsparameter des Elektromotors (37) überwacht und bei Überschreiten wenigstens eines vorgegebenen Grenzwertes (I,II) den Strom zu dem Elektromotor (37) unterbricht.

2. Fensterrollo nach Anspruch 1, **dadurch gekennzeichnet, dass** der Betriebsparameter der von dem Motor (37) aufgenommenen Strom oder die Stromänderung des von dem Motor aufgenommenen Stroms oder die Drehzahl des Motors (37) oder die Drehzahländerung ist.

3. Fensterrollo nach Anspruch 1, **dadurch gekennzeichnet, dass** der Sensor (46) ein Stromsensor ist.

4. Fensterrollo nach Anspruch 1, **dadurch gekennzeichnet, dass** der Stromsensor (46) von einem linearen ohmischen Widerstand gebildet ist.

5. Fensterrollo nach Anspruch 1, **dadurch gekennzeichnet, dass** der Sensor ein Drehzahlsensor (70) ist.

6. Fensterrollo nach Anspruch 1, **dadurch gekennzeichnet, dass** der Sensor (46,70) wenigstens eine Hallsonde ist.

7. Fensterrollo nach Anspruch 1, **dadurch gekennzeichnet, dass** der Grenzwert (I,II) dem Betriebsparameter des Elektromotors (37) beim Ausfahren der Rollobahn (21) zugeordnet ist.

8. Fensterrollo nach Anspruch 1, **dadurch gekennzeichnet, dass** der Grenzwert (I,II) dem Betriebsparameter des Elektromotors (37) beim Einfahren der Rollobahn (21) zugeordnet ist.

9. Fensterrollo nach Anspruch 1, **dadurch gekennzeichnet, dass** zwei Grenzwerte (I,II) vorgesehen sind, von denen der eine dem Ausfahren der Rollobahn (21) und der andere dem Einfahren der Rollobahn (21) zugeordnet ist.

10. Fensterrollo nach Anspruch 9, **dadurch gekennzeichnet, dass** die Grenzwerte (I, II) sich im Betrag und/oder im Vorzeichen unterscheiden.

11. Fensterrollo nach Anspruch 1, **dadurch gekennzeichnet, dass** der Wickelwelle (22) ein Federmotor (42) zugeordnet ist, durch den die Wickelwelle (22) im Sinne des Aufwickelns der Rollobahn (21) vorgespannt ist.

12. Fensterrollo nach Anspruch 1, **dadurch gekennzeichnet, dass** die Wickelwelle (22) formschlüssig mit dem Elektromotor (37) gekuppelt ist.

13. Fensterrollo nach Anspruch 1, **dadurch gekennzeichnet, dass** die Zugstabanordnung (25,77) endseitig in Führungsschienen (29) geführt ist.

14. Fensterrollo nach Anspruch 1, **dadurch gekennzeichnet, dass** Führungsschienen (29) vorgesehen sind, die Führungsnuten enthalten, wobei sich jede Führungsnut aus einer Nutenkammer (30) und einem Nutenschlitz (31) zusammensetzt, wobei die lichte Weite der Nutenkammer (30) größer ist als die Weite des Nutenschlitzes (31).

15. Fensterrollo nach Anspruch 1, **dadurch gekennzeichnet, dass** in der Nutenkammer (30) knicksteif geführte linienförmige Schublieder (32) enthalten sind, die formschlüssig mit dem Elektromotor (37) gekuppelt sind.

16. Fensterrollo nach Anspruch 1, **dadurch gekennzeichnet, dass** die Zugstabanordnung (77) mit einer Hebelanordnung (75) gekuppelt ist.

17. Fensterrollo nach Anspruch 1, **dadurch gekennzeichnet, dass** die Hebelanordnung (75) formschlüssig mit dem Elektromotor (37) verbunden ist.
